**Europäisches Patentamt**

**European Patent Office**

**Office européen des brevets**

(19)

(11) Publication number: **0 297 103 B1**

# EUROPEAN PATENT SPECIFICATION

(12)

(45) Date of publication of patent specification :
**10.07.91 Bulletin 91/28**

(51) Int. Cl.⁵ : **B60B 5/02, B60C 7/00**

(21) Application number : **87901719.2**

(22) Date of filing : **19.02.87**

(86) International application number :
**PCT/SE87/00083**

(87) International publication number :
**WO 87/05267 11.09.87 Gazette 87/20**

(54) **A SUPPORTING WHEEL.**

(30) Priority : **04.03.86 SE 8600986**

(43) Date of publication of application :
**04.01.89 Bulletin 89/01**

(45) Publication of the grant of the patent :
**10.07.91 Bulletin 91/28**

(84) Designated Contracting States :
**AT DE FR GB IT NL**

(56) References cited :
**FR-A- 2 197 737**
**GB-A- 1 471 697**
**US-A- 1 446 939**
**US-A- 4 350 196**

(73) Proprietor : **Hansson, Hans-Erik**
**Dunderbacksvägen 14**
**S-612 00 Finspang (SE)**

(72) Inventor : **Hansson, Hans-Erik**
**Dunderbacksvägen 14**
**S-612 00 Finspang (SE)**

(74) Representative : **Nilsson, Karl et al**
**STENHAGEN PATENTBYRA AB Box 17 709**
**S-118 93 Stockholm (SE)**

## Description

The present invention relates to a supporting wheel of the kind which includes a central part, a wheel rim which is intended to roll against a foundation surface, and an intermediate part which connects the central part with the wheel rim. More particularly, the invention relates to a non-pneumatic supporting wheel for use, e.g., with vehicles. A non-pneumatic wheel of the above defined type and adapted for use with motor vehicles is previously known through GB-A-1 471 697. In a region located between a central wheel portion and a continuous rim supporting a solid tyre, this known wheel is provided with a plurality of resilient webs, which join the central wheel portion to the rim, are mutually separated from one another in the peripheral direction of the wheel, and are curved alternatingly towards opposite sides of the wheel.

In the case of road vehicles fitted with conventional pneumatic-type wheels, the internal losses experienced within the tyres at normal road speeds, e.g. speeds of from 70 to 90 km/hour, are responsible for a considerable part, in the order of 20-30%, of the energy consumed during forward drive. This is because the rubber from which a tyre is constructed is far from being ideally elastic, and because the necessary reinforcing cords or plies, due to their particular arrangement, transfer local deformations of the tyre, e.g. tyre deformations that occur in the tyre section in contact with the road surface, to wide adjacent areas of the tyre, with large losses in energy as a result thereof. Furthermore, pneumatic-type vehicle wheels are rather heavy and demand a relatively high price.

Consequently, there is a need for non-pneumatic supporting wheels which while having functional properties comparable with those of pneumatic wheels, such as gripping power, contribution to driving comfort, etc., have none of the disadvantages of the pneumatic wheels.

The object of the present invention is to provide a novel and useful supporting wheel which will satisfy this need.

To this end there is proposed in accordance with the invention a supporting wheel of the aforesaid kind which is characterized in that the wheel rim is composed of a plurality of parts which are made of an elastic material and which are mutually separated from one another in the peripheral direction on the wheel, each of the wheel rim parts including two or more mutually connected beam elements which are located at mutually different radial distances from the wheel axis and which extend alternatingly towards opposite sides of the wheel, the radially innermost beam element having one end connected substantially rigidly to said intermediate part and the other end thereof connected substantially rigidly to one end of the next following beam element which, if not forming the radially outermost beam element, is in turn connected at its other end substantially rigidly to the next following beam element, and so on ;

the centre distance between said wheel rim parts does not appreciably exceed, and is preferably smaller than the peripheral extension of the wheel rim section in contact with the foundation surface within the intended loading region of the wheel ;

said wheel rim parts are mutually connected by means of a connecting arrangement which transfers substantially solely peripheral forces ; and

said beam elements are so constructed that the radially outermost beam elements of said wheel rim parts within the loading region of the wheel exert against the foundation surface a pressure which is distributed substantially uniformly across the width of said wheel.

The arrangement proposed in accordance with the invention affords the advantages of enabling the resilient parts of the wheel to be made from a plastics material that exhibits essentially truly elastic properties, to a much greater extent than was previously possible. A further advantage resides in the fact that local elastic deformation of the supporting wheel in, for instance, that section of the wheel which is in contact with the foundation or road surface, is transferred peripherally to adjacent regions or sections of the wheel rim to essentially a minimum extent. The connecting arrangement that connects together the wheel rim parts at a radial distance from said intermediate part, e.g. in the region of the outermost beam elements, enables said wheel rim parts to have a small extension in the peripheral direction of the wheel in a desirable manner, while at the same time allowing large forces to be transferred to the foundation surface, e.g. when accelerating or decelerating a vehicle supported by such wheels. The design of the wheel should be such that the pressure exerted in any part of the area of contact between the wheel and a horisontal planer foundation or road surface, when said wheel is loaded within its intended loading region, deviates less than 50% from the average pressure obtained by deviding the total load carried by the wheel with the total contact area.

In accordance with one particularly simple embodiment of the supporting wheel according to the invention, the aforesaid connecting arrangement may comprise at least one peripherally extending traction ring which is embedded in or letinto said wheel rim parts, preferably the outermost beam elements.

An advantage is afforded when the connecting arrangement comprises a tread which encircles said wheel rim parts and which while being relatively pliable and resilient cannot be strechted to any appreciable extent in the peripheral direction of the wheel. This arrangement avoids, inter alia, the occurence of vibrations caused by the individual wheel rim parts striking the foundation surface sequentially as the wheel rotates, and therewith avoids the subsequent risk of resonance phenomena, such resonance phenomena having a deliterious effect from a stress aspect and may also result in impermissible or unsuitable noise emission. The emission of noise can be reduced still further when, in accordance with one advantageous feature of the invention, the tread is higher at the edges thereof than at the central region thereof, so that when the wheel rolls against a foundation surface the aforesaid edges will contact this surface earlier than do the central region, whereby noise generated upon contact of the central region with the foundation surface is trapped or enclosed to some extent and therefore prevented from propagating as air-carried sound from the region in which it was generated. The wheel rim parts may be provided with sound absorbing material, for the purpose of absorbing sound transmitted by the rim parts, this material preferably being placed on the inner surfaces of said outermost beam elements. For the purpose of reducing the extent to which vibrations and sound are generated as the supporting wheel runs over a foundation surface or road surface, the aforesaid beam elements may form an angle with the wheel axis, when seen from the periphery of the wheel.

When using a tread that encircles the wheel rim parts, the tread is preferably perforated with apertures that open into gaps located between mutually adjacent wheel rim parts. This arrangement is effective in leading away any water that may penetrate between the tread and the foundation surface, thereby substantially eliminating the risk of aquaplaning on wet roads when using the supporting wheel to support a road vehicle.

For the purpose of avoiding damage to the supporting wheel when subjecting the wheel to heavy, powerful and abrupt load peaks, means can be provided between the beam elements and inwardly of the radially innermost beam elements, for damping and restricting bending of the beam elements.

The invention will now be described in more detail with reference to a number of exemplifying embodiments thereof illustrated in the accompanying drawings.

Figure 1 is a sectional view of a first embodiment of the supporting wheel according to the invention, taken on the line 1-1 in Figure 2.

Figure 2 is a side view of part of the supporting wheel illustrated in Figure 1.

Figure 3 is a view which corresponds essentially with the view of Figure 1, but in which certain component parts have been omitted and which shows beam elements of the supporting wheel in an inwardly sprung state.

Figure 4 is a sectional view of a second embodiment of the wheel according to the invention, said view corresponding essentially with the view of Figure 1 and being taken on the line IV-IV in Figure 5.

Figure 5 is a side view of a part of the supporting wheel illustrated in Figure 4.

Figure 6 is a sectional view of a third embodiment of the wheel according to the invention, said view corresponding essentially with the views of Figures 1 and 4 and being taken on the line VI-VI in Figure 7.

Figure 7 is a side view of a part of the supporting wheel illustrated in Figure 6.

Figure 8 is a partial view showing a portion of the tread of the supporting wheel illustrated in Figures 6 and 7 when seen from the periphery of the wheel.

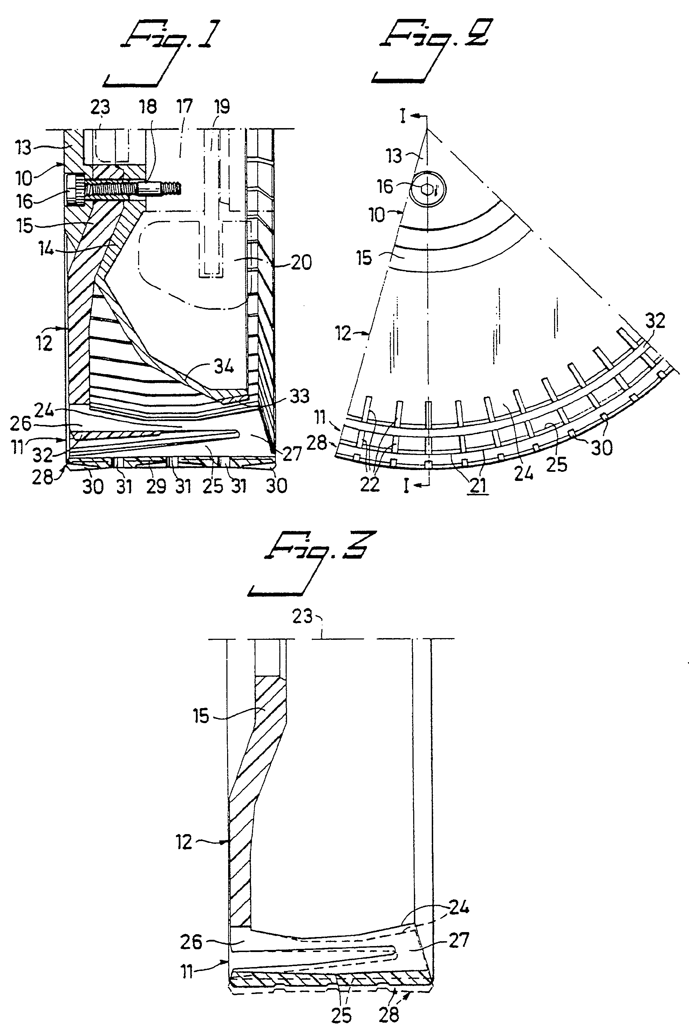

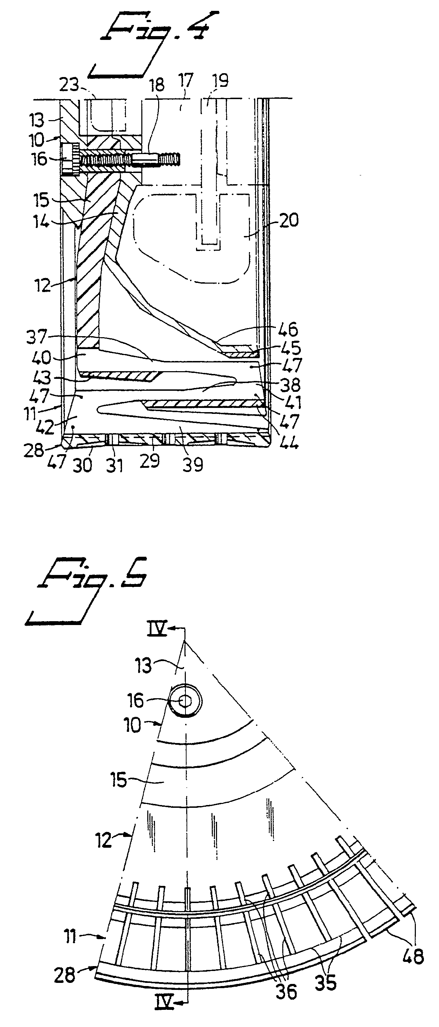

In Figures 1 and 2 there is illustrated a supporting wheel which comprises a central part, generally identified at 10, a wheel rim generally identified at 11, and an intermediate part 12 which connects the central part 10 and the wheel rim 11 together. The central wheel part 10 comprises two support members 13, 14, which are preferably made of metal, and a member 15 which is located between said support members and which is preferably made of an elastic plastics material, said member 15 adjoining the intermediate part 12. The supporting wheel is attached to a wheel hub 17, shown in chain lines, with the aid of socket screws 16 which screw onto screw-threaded studs 18 extending outwardly from the hub. Only one socket screw 16 and one stud 18 are shown. The reference numerals 19 and 20 identify respectively a brake disc and a brake shoe holder.

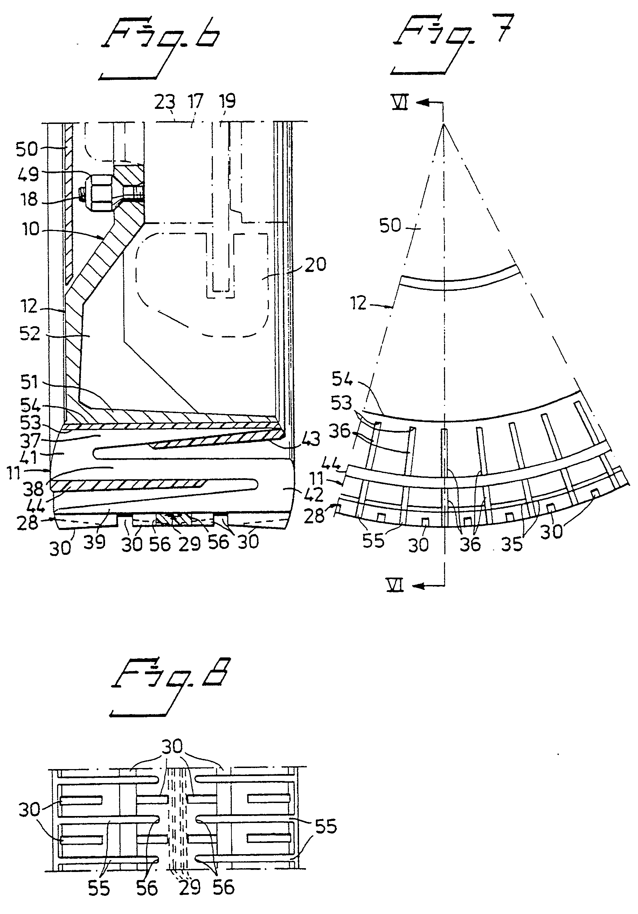

As will best be seen from Figure 2, the wheel rim 11 is comprised of a plurality of parts 21 which are mutually separated in the peripheral direction of the wheel such as to present spaces or slots 22 therebetween, these slots optionally extending in the direction of the wheel axis, as with the embodiment illustrated in Figure 1 in which the geometric axis of the wheel is referenced 23, or forming an angle with said axis. The wheel rim 11, and similarly also the intermediate part 12 and the member 15, comprises a material which essentially has truly elastic properties, preferably a plastics material that has essentially truly elastic properties. Each wheel rim part 21 comprises two beam elements 24, 25 which are located at mutually different radial distances from the wheel axis 23 and which extend alternatingly towards opposite sides of the wheel. The radially innermost beam element 24 has at 26 one end connected substantially rigidly to the central part 12 of the wheel and at 27 its other end connected substantially rigidly to the radially outer beam element 25. The centre distance between mutually sequential wheel rim parts 21 is preferably small, e.g. from 1/3-1/4 of the peripheral extension of the section of the wheel rim 11 in contact with the foundation surface. Although the centre distance may be greater than that aforesaid, however, it should not exceed said extension of the wheel rim section to any appreciable extent. The wheel rim parts 21 are joined together by means of a connecting arrangement 28 which will transfer essentially only peripheral forces. In the embodiment illustrated in Figures 1 and 2 the connecting arrangement 28 comprises a relatively pliable, elastic tread, e.g. a rubber tread, which encircles the wheel and which is preferably provided with reinforcing cords or plies 29 and may be patterned, as indicated at 30. The beam elements 24, 25 are constructed with regard to their mechanical strength properties in a manner such that the radially outermost elements 25 of the wheel rim parts within the intended wheel-loading region exert against the road surface a pressure which is distributed substantially uniformly across the width of the wheel. This is best seen from the simplified sectional view presented in Figure 3, which shows solely the intermediate part 12, the member 15, and the wheel rim 11.

In the illustration presented in Figure 3 the beam elements 24 and 25 and the tread 28 are drawn in broken lines in their unloaded state and in full lines in their loaded state. It will be seen from this illustration that as a result of the substantially rigid attachment of the beam element 25 at 27, the beam element 24 is bent into a slight.S-shape when the wheel is uniformly loaded, while the beam element 25 is slightly arched, the opposite ends of the beam element 25 being located at mutually the same distance from the axis 23. As illustrated, the tread 28 is conveniently higher at the edges thereof than at the central region thereof, and consequently when the wheel is loaded the tread 28 will bear against the road surface (not shown) with the bearing pressure distributed very uniformly over the contacting tread section. It will be understood, however, that if the road surface slopes in relation to the wheel axis 23, the beam elements will follow the road surface to some extent, thereby maintaining satisfactory contact therewith.

In the embodiment illustrated in Figure 1, the tread 28 is perforated with apertures 31 through which water can be pressed inwardly from the contact area of the wheel with the road surface to the open spaces between the beam elements 24, 25, thereby eliminating the risk of auqaplaning. A tread 28 with which the sides thereof are higher than the central portion of the tread is also advantageous from an acoustic aspect, since noise generated upon contact of the tread with the road surface is, to some extent, trapped or enclosed.

Improvements from an acoustic aspect can also be achieved by mounting a sound absorbant material (not shown) on the inner surfaces of the outermost beam elements 25.

In order to restrict the extent to which the beam elements 24, 25, are able to bend, damping devices 32, 33 are provided in the form of a ring 32 of soft resilient material encircling the beam elements 24 and a ring 33 of soft resilient material surrounding the radial outerpart of a collar 34, which extends from the support member 14 to a location in the proximity of the inner surfaces of the beam elements 24.

The references 10-20 and 28-31 in Figures 4 and 5 indicate similar components and elements as those in Figures 1 and 2. The wheel rim 11 of the Figure 4 and 5 embodiment is also composed of a plurality of parts 35 which are mutually spaced in the peripheral direction of the wheel to define intermediate spaces or slots 36. Each wheel rim part 35 comprises three beam elements 37, 38, 39 which are located at mutually different distances from the geometric axis 23 of the wheel and extend alternatingly towards opposite sides of the wheel. The radially innermost beam element 37 has at 40 one end connected essentially rigidly to the intermediate part 12 of the wheel and at 41 its other end connected essentially rigidly to one end of the next following beam element 38, which in turn at 42 has one end connected substantially rigidly to the radially outer beam element 39. The centre distances between mutually sequential wheel rim parts are selected in the manner described with reference to Figures 1 or 2, and the wheel rim parts 35 may be joined together by means of a connecting arrangement 28-31 which, with the exception of minor differences in the pattern 30, coincides with the arrangement 28-31 of the embodiment illustrated in Figures 1 and 2. The beam elements 37, 38, 39 of the Figure 4 and 5 embodiment are also constructed with regard to their mechanical strength in a manner such that the radially outermost elements 39 of the wheel rim parts 35 within the intended wheel loading region exert against the road surface a pressure which is substantially uniformly distributed over the width of the wheel.

In order to restrict the extent to which the beam elements 37, 38, 39 are able to bend, damping devices 43, 44, 45 are provided in the form of rings 43, 44 of soft, resilient material which encircle the beam elements 37 and 38, and a ring 45 of soft resilient material which encircles the radially outerpart of a collar 46 which extends outwardly from the support member 14 to a location in the proximity of the inner surfaces of the beam elements 37.

Instead of, or complimentary to, a tread which is reinforced in the peripheral direction of and extends around the wheel for transferring substantially solely peripheral forces between the wheel rim parts 21 or 35, there can be used one or more peripherally extending pull rings which are let-into or embedded in the wheel rim parts, as illustrated at 47 in Figure 4. If, in this regard, a tread layer is desired on the outermost beam elements, this layer may be formed from separate tread sections each covering a respective beam element in the manner illustrated at 48 in Figure 5.

The reference numerals 10-12, 17-20, 23, 28-30, 37-39 and 41-44 in Figures 6-8 indicate similar components and elements as those in Figures 4 and 5. In the embodiment shown in Figures 6-8, the central wheel part 10 and the intermediate part 11 are made from a substantially rigid material, such as aluminum. The supporting wheel is attached to the wheel hub 17 with the aid of nuts 49 (only one nut 49 being shown). The central wheel part 10 is covered by a removable hub cap 50. The intermediate wheel part 12 is provided with a cylindrical collar portion 51 at its outer periphery, said portion 51 being supported by radial stiffening fins, one of which is shown at 52 in Figure 6.

The radial slots 36 of the wheel rim 11 extend completely through the beam elements 39 and 38 and end at 53 at a short distance from the radially inner surface 54 of the wheel rim 11. This radially inner surface 54 of the wheel rim is secured to the radially outer surface of the collar portion 51 with the aid of, e.g., a suitable adhesive. Thus, the radially innermost beam elements 37 are rigidly supported by the collar portion 51, while the beam elements 38 and 39 are able to bend in the manner described with reference to Figures 1-3 or 4 and 5.

The tread 28 shown in Figures 6-8 is patterned, as indicated at 30, and opposite the slots 36 between adjacent wheel rim parts 35 the tread 28 is provided with through-passing recesses 55 which extend from a respective edge of the tread to positions 56 close to the centre of the tread 28. The narrow central tread region shown in cross-section in Figure 6 is flexible so as to allow a narrowing of the slots 36 at one side of the supporting wheel and a widening of said slots at the other side of the wheel, e.g. to prevent relative movement between a road surface and a portion of the tread 28 in contact with said surface when moderately turning the wheel.

The invention is not restricted to the described and illustrated embodiments, but modifications can be made within the scope of the inventive concept defined in the following claims.

## Claims

1. A support wheel comprising a central part (10), a wheel rim (11) which is intended to roll against a foundation surface, and an intermediate part (12) which connects the central part with the wheel rim, characterized in that the wheel rim (11) is composed of a plurality of parts (21 ; 35) which are made of an elastic material and which are mutually separated from one another in the peripheral direction of the wheel, each of the wheel rim parts including two or more mutually connected beam elements (24, 25 ; 37, 38, 39) which are located at mutuly different radial distances from the wheel axis (23) and which extend alternatingly towards opposite sides of the wheel, the radially innermost beam element (24 ; 37) having one end connected substantially rigidly to said intermediate part (12) and the other end thereof connected substantially rigidly to one end of the next following beam element (25 ; 38) which, if not forming the radially outermost beam element, is in turn connected at its other end substantially rigidly to the next following beam element (39), and so on ; the centre distance between said wheel rim parts (21 ; 35) does not appreciably exceed, and is preferably smaller than the peripheral extension of the wheel rim section in contact with the foundation surface within the intended loading region of the wheel ; said wheel rim parts (21 ; 35) are mutually connected by means of a connecting arrangement (28 ; 47) which transfers substantially solely peripheral forces; and said beam elements (24, 25 ; 37, 38, 39) are so constructed that the radially outermost beam elements (25 ; 39) of said wheel rim parts (21 ; 35) within the loading region of the wheel exert against the foundation surface a pressure which is distributed substantially uniformly across the width of said wheel.

2. A supporting wheel according to Claim 1, characterized in that the connecting arrangement (47) comprises at least one peripherally extending traction ring which is embedded in or let-into said wheel rim parts.

3. A supporting wheel according to Claim 1 or 2, characterized in that the connecting arrangement (28) includes a relatively soft elastic tread which encircles said wheel rim parts and which is substantially non-stretchable in the peripheral direction of the wheel.

4. A supporting wheel according to Claim 3, characterized in that the tread (28) is higher at the edges thereof than in its central region, such that when the wheel rolls against a foundation surface the edges of the tread will come into contact with said surface prior to said central tread region.

5. A supporting wheel according to Claim 3 or 4, characterized in that the wheel rim parts (35) are mutually spaced in the peripheral direction of the wheel to define intermediate slots (36), wherein the tread (28) opposite said slots is provided with through-passing recesses (55) which extend from a respective edge of the tread towards the central region thereof, and wherein said central tread region is flexible but substantially non-stretchable in the peripheral direction of the wheel.

6. A supporting wheel according to any of Claims 3-5, characterized in that the tread (28) is provided with through-passing apertures (31).

7. A supporting wheel according to any of Claims 1-6, characterized in that said beam elements (24, 25 ; 37, 38, 39) form an angle with the wheel axis (23) when seen from the periphery of the wheel.

8. A supporting wheel according to any of Claims 1-7, characterized in that said outermost beam elements (25 ; 39) have sound absorbing material located on the inner surfaces thereof.

9. A supporting wheel according to any of Claims 1-8, characterized in that damping means (32, 33 ; 43, 44, 45) are arranged between the beam elements (24, 25 ; 37, 38, 39) and inwardly of the radially innermost beam elements (24 ; 37), for damping and restricting bending of the beam elements.

**Patentansprüche**

1. Stützrad, bestehend aus einem Mittelteil (10), einem Radkranz (11), der einem Abrollen auf einer Bodenfläche dient, und einem Zwischenteil (12), der den Mittelteil mit dem Radkranz verbindet, dadurch gekennzeichnet, daß der Radkranz (11) aus einer Mehrzahl von Teilen (21 ; 35) besteht, die aus einem elastischen Material hergestellt sind und die gegenseitig in Umfangsrichtung des Rades voneinander getrennt sind, jeder der Radkranzteile zwei oder mehr miteinander verbundene Trägerelemente (24, 25 ; 37, 38, 39) aufweist, die mit zueinander unterschiedlichen radialen Abständen von der Radachse (23) angeordnet sind und die sich abwechselnd zu entgegengesetzten Seiten des Rades hin erstrecken, das radial innerste Trägerelement (24 ; 37) mit einem Ende im wesentlichen starr mit dem Zwischenteil (12) und mit seinem anderen Ende im wesentlichen starr mit einem Ende des nächstfolgenden Trägerelements (25 ; 38) verbunden ist, das, wenn es nicht das radial äußerste Trägerelement bildet, seinerseits an seinem anderen Ende im wesentlichen starr mit dem nächstfolgenden Trägerelement (39) verbunden ist, und so weiter, der Mittenabstand zwischen den Radkranzteilen (21 ;35) die Umfangserstreckung des mit der Bodenfläche innerhalb der vorgesehenen Belastungszone des Rades in Berührung stehenden Radkranzabschnitts nicht merklich überschreitet und vorzugsweise kleiner ist als diese, die Radkranzteile (21 ; 35) miteinander mittels einer Verbindungseinrichtung (28 ; 47) verbunden sind, die im wesentlichen nur Umfangskräfte überträgt, und die Trägerelemente (24, 25 ; 37, 38, 39) so konstruiert sind, daß die radial äußersten Trägerelemente (25 ; 39) der Radkranzteile (21 ; 35) innerhalb der Belastungszone des Rades gegenüber der Bodenfläche einen Druck ausüben, der im wesentlichen gleichmäßig über die Breite des Rades verteilt wird.

2. Stützrad nach Anspruch 1, dadurch gekennzeichnet, daß die Verbindungseinrichtung (47) zumindest einen sich in Umfangsrichtung erstreckenden Zugring umfaßt, der in den Radkranzteilen eingebettet oder in diese eingelassen ist.

3. Stützrad nach Anspruch 1 oder 2, dadurch gekennzeichnet, daß die Verbindungseinrichtung (28) eine verhältnismäßig weiche elastische Lauffläche aufweist, die die Radkranzteile umgibt und die im wesentlichen in Umfangsrichtung des Rades nicht-streckbar ist.

4. Stützrad nach Anspruch 3, dadurch gekennzeichnet, daß die Lauffläche (28) an ihren Rändern höher ist als in ihrem mittleren Bereich, derart, daß, wenn das Rad auf einer Bodenfläche abrollt, die Ränder der Lauffläche mit der Bodenfläche vor dem mittleren Laufflächenbereich in Berührung kommen.

5. Stützrad nach Anspruch 3 oder 4, dadurch gekennzeichnet, daß die Radkranzteile (35) in Umfangsrichtung des Rades voneinander zur Bildung von Zwischenschlitzen (36) beabstandet sind, wobei die Lauffläche (28) gegenüber den Schlitzen mit Durchgangsausnehmungen (55) versehen ist, die sich jeweils von einem Rand der Lauffläche zu deren mittlerem Bereich hin erstrecken, und wobei der mittlere Laufflächenbereich flexibel, jedoch in Umfangsrichtung des Rades im wesentlichen nicht-streckbar ist.

6. Stützrad nach einem der Ansprüche 3 bis 5, dadurch gekennzeichnet, daß die Lauffläche (28) mit Durchgangsöffnungen (31) versehen ist.

7. Stützrad nach einem der Ansprüche 1 bis 6, dadurch gekennzeichnet, daß die Trägerelemente (24, 25 ; 37, 38, 39), vom Umfang des Rades aus gesehen, einen Winkel mit der Radachse (23) bilden.

8. Stützrad nach einem der Ansprüche 1 bis 7, dadurch gekennzeichnet, daß die äußersten Trägerelemente (25 ; 39) auf ihrer inneren Oberfläche mit geräuschdämpfendem Material versehen sind.

9. Stützrad nach einem der Ansprüche 1 bis 8, dadurch gekennzeichnet, daß Dämpfungsmittel (32, 33 ; 43, 44, 45) zwischen den Trägerelementen (24, 25 ; 37, 38, 39) und auf der Innenseite der radial innersten Trägerelemente (24 ; 37) zur Dämpfung und Biegungsbegrenzung der Trägerelemente angeordnet sind.

**Revendications**

1. Une roue de support comprenant une partie centrale (10), une jante de roue (11) qui est destinée à rouler sur une surface de base, et une partie intermédiaire (12) qui relie la partie centrale à la jante de roue, caractérisée en ce que la jante de roue (11) est composée d'une pluralité de parties (21 ; 35) qui sont réalisées en un matériau élastique et qui sont séparées les unes des autres dans la direction périphérique de la roue, chacune des parties de jante de roue comprenant au moins deux éléments de poutre reliés entre eux (24, 25 ; 37, 38, 39) qui sont situés à des distances radiales mutuelles différentes de l'axe de roue (23) et qui s'étendent alternativement vers des faces opposées de la roue, l'élément de poutre radialement le plus intérieur (24, 37) présentant une extrémité reliée de façon sensiblement rigide à ladite partie intermédiaire (12) et son autre extrémité étant reliée de façon sensiblement rigide à une extrémité de l'élément de poutre immédiatement suivant (25 ; 38) qui, s'il ne forme pas l'élément de poutre radialement le plus extérieur et, par contre, relié à son autre extrémité de façon sensiblement rigide à l'élément de poutre qui suit immédiatement (39), et ainsi de suite ;

en ce que la distance des centres entre lesdites parties de jante de roue (21 ; 35) n'excède pas de façon appréciable et est de préférence inférieure au prolongement périphérique de la section de jante de roue en contact avec la surface de base à l'intérieur de la zone de la roue destinée à supporter la charge ;

en ce que lesdites parties de jante de roue (21 ; 35) sont mutuellement reliées à l'aide d'un agencement de liaison (28 ; 47) qui transfère presque uniquement les forces périphériques ; et

en ce que lesdits éléments de poutre (24, 25 ; 37, 38, 39) sont réalisés de telle façon que les éléments de poutre radialement les plus extérieurs (25 ; 39) desdites parties de jante de roue (21 ; 35) à l'intérieur de la zone de charge de la roue exercent sur la surface de base une pression qui est distribuée de façon sensiblement uniforme sur toute la largeur de ladite roue.

2. Une roue de support selon la revendication 1, caractérisée en ce que l'agencement de liaison (47) comporte au moins un anneau de traction qui s'étend de façon périphérique et qui est noyé dans ou disposé à l'intérieur desdites parties de jante de roue.

3. Une roue de support selon la revendication 1 ou 2, caractérisée en ce que l'agencement de liaison (28) comporte une table de roulement élastique relativement molle qui entoure lesdites parties de jante de roue et qui est sensiblement non étirable dans la direction périphérique de la roue.

4. Une roue de support selon la revendication 3, caractérisée en ce que la table de roulement (28) est plus haute sur ses bords que dans sa zone centrale, de telle façon que, lorsque la roue roule sur une surface de base, les bords de la table de roulement viennent en contact avec ladite surface avant ladite zone centrale de la table de roulement.

5. Une roue de support selon la revendication 3 ou 4, caractérisé en ce que les parties de jante de roue (35) sont mutuellement espacées dans la direction périphérique de la roue pour définir des fentes intermédiaires (36), dans laquelle la table de roulement (28) opposée auxdites fentes est munie de cavités traversantes (55) qui s'étendent depuis un bord respectif de la table de roulement vers sa zone centrale, et dans lequel ladite zone centrale de table de roulement est flexible mais sensiblement non étirable dans la direction périphérique de la roue.

6. Une roue de support selon l'une quelconque des revendications 3 à 5, caractérisée en ce que la table de roulement (28) est munie d'ouvertures traversantes (31).

7. Une roue de support selon l'une quelconque des revendications 1 à 6, caractérisée en ce que lesdits éléments de poutre (24, 25 ; 37, 38, 39) forment un angle avec l'axe de roue (23) lorsqu'ils sont vus depuis la périphérie de la roue.

8. Une roue de support selon l'une quelconque des revendications 1 à 7, caractérisée en ce que lesdits éléments de poutre les plus extérieurs (25 ; 39) sont munis de matériaux d'absorption phoniques situés sur leurs surfaces intérieures.

9. Une roue de support selon l'une quelconque des revendications 1 à 8, caractérisée en ce que des moyens d'amortissement (32, 33 ; 43, 44, 45) sont agencés entre les éléments de poutre (24, 25 ; 37, 38, 39) et à l'intérieur des éléments de poutre radialement les plus intérieurs (24 ; 37) afin d'amortir et de limiter la flexion des éléments de poutre.

Fig.1

Fig.2

Fig.3

Fig.4

Fig.5

# Fig. 6

23  17  19

50
49
18
10
20
12
52
51
54
53
37
43
41
11
38
44
28
30  39  30  56  29  56  30

# Fig. 7

VI

50
12
54
53
36
44
11
42
28
55  30  36  35  30

VI

# Fig. 8

30
30
55
55  56  29  56